(19) Europäisches Patentamt / European Patent Office / Office européen des brevets

(11) **EP 4 393 983 A1**

(12) **EUROPEAN PATENT APPLICATION**
published in accordance with Art. 153(4) EPC

(43) Date of publication:
**03.07.2024 Bulletin 2024/27**

(21) Application number: **22861378.2**

(22) Date of filing: **24.08.2022**

(51) International Patent Classification (IPC):
*C08J 3/12* (2006.01)　　*A01N 33/12* (2006.01)
*A01N 61/00* (2006.01)　　*A01P 1/00* (2006.01)
*C08F 212/04* (2006.01)　　*C09D 125/04* (2006.01)
*C09D 201/00* (2006.01)

(52) Cooperative Patent Classification (CPC):
**A01N 33/12; A01N 61/00; A01P 1/00;**
**C08F 212/04; C08J 3/12; C09D 125/04;**
**C09D 201/00**

(86) International application number:
**PCT/JP2022/031788**

(87) International publication number:
**WO 2023/027090 (02.03.2023 Gazette 2023/09)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **26.08.2021 JP 2021138344**

(71) Applicant: **KIRIN HOLDINGS KABUSHIKI KAISHA**
**Nakano-ku, Tokyo 164-0001 (JP)**

(72) Inventors:
• **NAGAO Daisuke**
**Sendai-shi, Miyagi 980-8577 (JP)**
• **SUGA Keishi**
**Sendai-shi, Miyagi 980-8577 (JP)**
• **NAKAYAMA Shota**
**Sendai-shi, Miyagi 980-8577 (JP)**
• **TSUJI Toshikazu**
**Tokyo 164-0001 (JP)**
• **YAMADA Sayuri**
**Tokyo 164-0001 (JP)**
• **KONOEDA Yuki**
**Tokyo 164-0001 (JP)**

(74) Representative: **ABG Intellectual Property Law,**
**S.L.**
**Avenida de Burgos, 16D**
**Edificio Euromor**
**28036 Madrid (ES)**

(54) **ANTIBACTERIAL PARTICLES CONTAINING CATIONIC POLYMER**

(57) The purpose of the present invention is to provide polymer particles that exhibit antimicrobial properties even in the presence of a salt, and provided are the polymer particles containing a structural unit derived from a cationic polymerization initiator, a main monomer containing a carbon-carbon double bond (excluding a cationic comonomer), and a cationic comonomer containing a carbon-carbon double bond, and satisfying all of the following conditions:

(i) a relative permittivity ($\varepsilon_r$), as an index of surface hydrophobicity, $\leq 24$;
(ii) a surface charge density ($\sigma$) $\geq 0.5$ unit/nm$^2$; and
(iii) satisfying the relational formula: $Cp \geq 3.0 \times 0.65^K$, wherein K ($\mu$M$^{-1}$): binding equilibrium constant as an index of affinity with 6-(p-toluidino)-2-naphthalenesulfonic acid sodium salt (TNS), Cp (mg/mL): polymer particle concentration for exhibiting antimicrobial properties.

[Fig. 2]

$$\text{Log } Cp = -0.19K + 3.0$$

**Description**

[Technical Field]

The present application claims priority of Japanese patent application No. 2021-138344, and the contents of the basic application are incorporated by reference into a part of the description of this application. If there is a conflict between the description of the present application and the description of the basic application, the statement of the description of the present application naturally takes precedence over the statement of the description of the basic application.

The present invention is in the field of antibacterial particles, and more specifically relates to antimicrobial particles containing cationic polymers.

[Background Art]

The recent rise in hygiene awareness requires various products to have antimicrobial properties, and further at low cost.

NPL 1 and NPL 2 disclose a technique of immobilizing a water-soluble cationic polymer (specifically, polydiallyldimethylammonium chloride), functioning as a contact type antibacterial agent, on polymer particles (specifically, poly (methyl methacrylate)) to prevent the elution thereof. Such polymer particles destroy the cell membrane of bacteria by adsorption of the immobilized cationic polymer onto the bacterial surface, and thus exhibit antibacterial activity. Further, these polymer particles exhibit antibacterial activity both by using as a water-dispersible antibacterial agent raw material and coating on a substrate as an antibacterial coating material.

However, the antibacterial activity by cationic polymers is exhibited due to electrostatic interaction, and thus was sometimes reduced in solutions containing electrolytes. It is practically important for antibacterial agents to exhibit antibacterial activity even in the presence of a salt.

Further, it is also practically important for antibacterial agents to be synthesized efficiently. Here, synthesis of antibacterial agent polymer particles, in which a pre-synthesized cationic polymer, as an antibacterial agent, is immobilized by such as kneading into the particles, requires increased synthesis steps, resulting in poor synthesis efficiency. Therefore, synthesis of antibacterial agent polymer particles demands a technique for exhibiting high synthesis efficiency and reducing the number of steps in the synthesis method as much as possible.

Further, PTL 1 discloses a related technology of an additive for imparting antimicrobial properties to a resin. The additive comprises a string-like polymer having a positive charge on at least one end, and the string-like polymer is a polymer containing structural units derived from a cationic polymerization initiator and a monomer containing a carbon-carbon double bond.

PTL 2 discloses a method for producing a water- and oil-repellent antibacterial composition. In this production method, mixed are an aqueous fluoropolymer dispersion containing a fluoropolymer having a fluoroalkyl group, a surfactant, and an aqueous medium, wherein the zeta-potential of particles containing the fluoropolymer is 2 mV or more and 100 mV or less; antibacterial particles with silver, copper or zinc supported on an inorganic carrier; and a water-soluble polymer having an anionic functional group.

In PTL 3, disclosed is an active cationic polymer latex comprising: a) latex polymer containing a polymerization product: i) at least one ethylenically unsaturated first monomer; and ii) at least one ethylenically unsaturated second monomer being cationic or a precursor to a cation; b) at least one active ingredient at least partially encapsulated within the latex polymer; and c) optionally, at least one sterically bulky component incorporated into the latex polymer.

[Citation List]

[Patent Literature]

[PTL 1] International Publication No. 2019/208674
[PTL 2] Japanese Unexamined Patent Application Publication No. 2019-137811
[PTL 3] Japanese Unexamined Patent Publication (Translation of PCT Application) No. 2011-524337

[Non Patent Literature]

[NPL 1] Sanches et al., J. Nanobiotechnol., 2015, 13(1), 1-13
[NPL 2] Galvao et al., Int. J. Mol. Sci., 2018, 19(10), 2965-2978

[Summary of Invention]

The present inventors have found out that, among polymer particles polymerized using a cationic polymerization initiator, a cationic comonomer, and a main monomer, particles having hydrophobicity and charge density on the surface both above a certain value can exhibit antimicrobial properties even in a solution such as a general culture medium containing a high concentration of a salt, and that a certain relationship is satisfied between the particles' affinity with anionic compounds and the particle concentration (Cp) required to exhibit antimicrobial properties. The present invention is based on these findings.

Therefore, the present invention provides polymer particles that exhibit antimicrobial properties even in the presence of a salt.

The present invention includes the following inventions.

(1) Polymer particles containing a structural unit derived from a cationic polymerization initiator, a main monomer containing a carbon-carbon double bond (excluding a cationic comonomer), and a cationic comonomer containing a carbon-carbon double bond, and satisfying all of the following conditions:

(i) a relative permittivity ($\varepsilon_r$), as an index of surface hydrophobicity, $\leq 24$;
(ii) a surface charge density ($\sigma$) $\geq 0.5$ unit/nm$^2$; and
(iii) satisfying a relational formula: Cp $\geq 3.0 \times 0.65^K$, wherein K ($\mu$M$^{-1}$): binding equilibrium constant as an index of affinity with 6-(p-toluidino)-2-naphthalenesulfonic acid sodium salt (TNS), Cp (mg/mL): polymer particle concentration for exhibiting antimicrobial properties.

(2) The polymer particles according to (1), wherein the relative permittivity ($\varepsilon_r$) as an index of surface hydrophobicity in (i) is 20 or less.
(3) The polymer particles according to any one of (1) or (2), wherein the cationic polymerization initiator is 2,2'-azobis-(2-(1,3-dimethyl-4,5-dihydro-1H-imidazol-3-ium-2-yl))propane triflate (ADIP), or 2,2'-azobis-(2-(1,3-dimethyl-4,5-dihydro-1H-imidazol-3-ium-2-yl))propane chloride (ADIP-Cl).
(4) The polymer particles according to any one of (1) to (3), wherein the cationic comonomer is vinylbenzyltrimethylammonium chloride (VBTMA) and/or methacrylamidopropyltrimethylammonium chloride (MAPTAC).
(5) The polymer particles according to any one of (1) to (4), wherein the polymer particles are obtained by a polymerization reaction using the cationic polymerization initiator, the main monomer, and the cationic comonomer, and the amount of the cationic comonomer used in the polymerization reaction is 1.0 mol% or more and 7.0 mol% or less with respect to the total amount of the main monomer and the cationic comonomer.
(6) The polymer particles according to (5), wherein the amount of the cationic polymerization initiator used in the polymerization reaction is 0.3 mol% or more and 1.0 mol% or less with respect to the total amount of the main monomer and the cationic comonomer.
(7) A composition for antimicrobial use comprising the polymer particles according to any one of (1) to (6).
(8) The composition for antimicrobial use according to (7), wherein the composition is used for preventing food poisoning.
(9) The composition for antimicrobial use according to any one of (7) or (8), wherein the composition is in a form of an emulsion.
(10) A coating material for antimicrobial use comprising the composition for antimicrobial use according to any one of (7) to (9).
(11) The composition for antimicrobial use according to any one of (7) to (9), or the coating material for antimicrobial use according to (10) for using the polymer particles according to any one of (1) to (6) under the condition satisfying a relational formula: Cp $\geq 3.0 \times 0.65^K$, wherein K ($\mu$M$^{-1}$): binding equilibrium constant as an index of affinity with 6-(p-toluidino)-2-naphthalenesulfonic acid sodium salt (TNS), Cp (mg/mL): polymer particle concentration.
(12) A method for selecting polymer particles exhibiting antimicrobial properties even in the presence of a salt from candidate polymer particles containing a structural unit derived from a cationic polymerization initiator, a main monomer containing a carbon-carbon double bond (excluding a cationic comonomer), and a cationic comonomer containing a carbon-carbon double bond, the method comprising the steps of:

(a) a step of checking whether the candidate polymer particles satisfying the following conditions:

(i) a relative permittivity ($\varepsilon_r$), as an index of surface hydrophobicity, $\leq 24$;

(ii) a surface charge density ($\sigma$) $\geq$ 0.5 unit/nm$^2$; and

(iii) satisfying a relational formula: Cp $\geq$ 3.0 $\times$ 0.65$^K$, wherein K ($\mu$M$^{-1}$): binding equilibrium constant as an index of affinity with 6-(p-toluidino)-2-naphthalenesulfonic acid sodium salt (TNS), Cp (mg/mL): polymer particle concentration for exhibiting antimicrobial properties; and

(b) a step of identifying the candidate polymer particles, when satisfying all of the conditions (i) to (iii), as polymer particles exhibiting antimicrobial properties even in the presence of a salt.

(13) The method according to (12), wherein the relative permittivity ($\varepsilon_r$) as an index of surface hydrophobicity in (i) is 20 or less.

(14) The method according to any one of (12) or (13), wherein the cationic polymerization initiator is 2,2'-azo-bis-(2-(1,3-dimethyl-4,5-dihydro-1H-imidazol-3-ium-2-yl))propane triflate (ADIP), or 2,2'-azobis-(2-(1,3-dimethyl-4,5-dihydro-1H-imidazol-3-ium-2-yl))propane chloride (ADIP-Cl).

(15) The method according to any one of (12) to (14), wherein the cationic comonomer is vinylbenzyltrimethylammonium chloride (VBTMA) and/or methacrylamidopropyltrimethylammonium chloride (MAPTAC).

(16) Polymer particles containing a structural unit derived from a cationic polymerization initiator, a main monomer containing a carbon-carbon double bond (excluding a cationic comonomer), and a cationic comonomer containing a carbon-carbon double bond, and having a relative permittivity ($\varepsilon_r$), as an index of surface hydrophobicity, of 24 or less.

(17) The polymer particles according to (16), wherein the main monomer has the number of carbon atoms of 5 or more and 10 or less.

(18) The polymer particles according to any one of (16) or (17), wherein the main monomer is one or more selected from the group consisting of styrene, alkyl acrylate, and alkyl methacrylate.

(19) The polymer particles according to any one of (16) to (18), wherein the cationic comonomer has a quaternary ammonium group and has the number of carbon atoms of 8 or more and 14 or less.

(20) Use of the polymer particles according to any one of (16) to (19) for preparing a composition used for preventing food poisoning.

In accordance with the present invention, provided are polymer particles exhibiting antimicrobial properties even in the presence of a salt. Further, in accordance with the present invention, also provided is a method for selecting polymer particles with excellent synthesis efficiency. Furthermore, the present invention also enables determination of the preferred concentration for use of the polymer particles.

[Brief Description of Drawings]

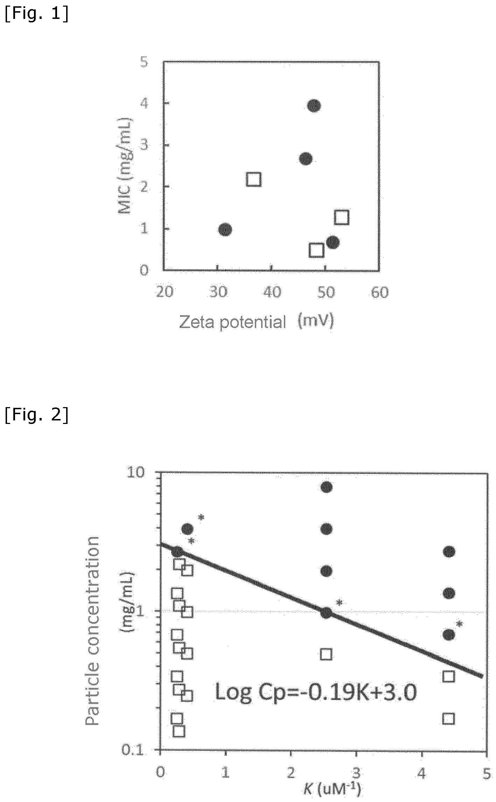

Fig. 1 is a graph showing the relationship between the MIC (mg/mL) of cationic polymer particles (when no antibacterial properties are exhibited, the highest concentration tested) and the zeta potential (mV) of the polymer particle suspension. Black circles indicate particles with antibacterial properties, and white squares indicate particles without antibacterial properties.

Fig. 2 is a graph showing the result by a semi-logarithmic plot of the particle concentration Cp (mg/mL) of the polymer particles on the vertical axis against the cationic polymer particles' binding equilibrium constant (K) ($\mu$M$^{-1}$) with TNS. Black circles indicate particle concentrations of polymer particles with antibacterial properties, and white squares indicate particle concentrations of polymer particles without antibacterial properties. The test concentration corresponding to MIC is marked with an asterisk.

[Description of Embodiments]

Embodiments of the present invention will be described in detail below. Note that the embodiments shown below are described for explanation by way of example, and the configuration of the present invention is not limited to each configuration described in the embodiments shown below.

In the present embodiment, "antimicrobial properties" refer to the properties of inhibiting the development, growth, and/or proliferation of microorganisms. Here, microorganisms refer to organisms classified as "microorganisms" in the taxonomy of living organisms, and is a concept including, for example, Gram-positive bacteria such as Staphylococcus aureus, Gram-negative bacteria such as Escherichia coli, fungi, yeast, and viruses. Antimicrobial properties in the embodiments of the present invention preferably refer to inhibiting the development, growth, and/or proliferation of Gram-positive bacteria such as Staphylococcus aureus, Gram-negative bacteria such as Escherichia coli, and/or viruses such as feline calicivirus.

The polymer particles of the present embodiment are polymer particles containing a structural unit derived from a cationic polymerization initiator, a main monomer containing a carbon-carbon double bond (excluding a cationic comonomer), and a cationic comonomer containing a carbon-carbon double bond, and satisfying all of the following conditions:

(i) a relative permittivity ($\varepsilon_r$), as an index of surface hydrophobicity, $\leq 24$;
(ii) a surface charge density ($\sigma$) $\geq 0.5$ unit/nm$^2$; and
(iii) satisfying the relational formula: Cp $\geq 3.0 \times 0.65^K$, wherein K ($\mu M^{-1}$): binding equilibrium constant as an index of affinity with 6-(p-toluidino)-2-naphthalenesulfonic acid sodium salt (TNS), Cp (mg/mL): polymer particle concentration.

Satisfying the conditions (i) to (iii) above allow the polymer particles of the present embodiment to exhibit excellent antimicrobial action (antibacterial action) even in the presence of a salt. According to another embodiment of the present invention, provided is a method for selecting polymer particles exhibiting antimicrobial properties even in the presence of a salt from candidate polymer particles containing a structural unit derived from a cationic polymerization initiator, a main monomer containing a carbon-carbon double bond (excluding a cationic comonomer), and a cationic comonomer containing a carbon-carbon double bond, and the method includes the following steps: (a) a step of checking whether the candidate polymer particles satisfy the conditions (i) to (iii); and (b) a step of identifying the candidate polymer particles, when all of the conditions (i) to (iii) are satisfied, as polymer particles exhibiting antimicrobial properties even in the presence of a salt.

The hydrophobicity of the polymer particles in the present embodiment is represented by the surface hydrophobicity of the polymer particles. Generally, this surface hydrophobicity is conveniently measured using a fluorescent dye which changes the fluorescence intensity in a hydrophobic environment. Examples of fluorescent dyes, used for measurement of surface hydrophobicity, include 6-(p-toluidino)-2-naphthalenesulfonic acid sodium salt (TNS) and anilinonaphthalenesulfonic acid (ANS), and these fluorescent dyes exhibit a shift in fluorescence wavelength and/or an increase in fluorescence intensity in a hydrophobic environment. A specific index of surface hydrophobicity includes relative permittivity ($\varepsilon_r$), which can be estimated by comparing the fluorescence characteristics in a solvent with a substance having a known relative permittivity. The relative permittivity ($\varepsilon_r$) in the present embodiment can be measured more specifically by the method for evaluating hydrophobicity of the surface of polymer particles described in Example 2. The relative permittivity ($\varepsilon_r$) of the polymer particles of the present embodiment, from the viewpoint of antibacterial properties, is 24 or less, preferably 20 or less, and more preferably 16 or more and 20 or less.

No polymer particle has been known so far containing a structural unit derived from a cationic polymerization initiator, a main monomer containing a carbon-carbon double bond (excluding a cationic comonomer), and a cationic comonomer containing a carbon-carbon double bond, and having a relative permittivity ($\varepsilon_r$), as an index of surface hydrophobicity, of 24 or less. Therefore, such polymer particles constitute one embodiment of the present invention. In accordance with the present embodiment, novel polymer particles characterized by surface hydrophobicity are provided.

The surface charge density ($\sigma$) of the polymer particle in the present embodiment is the charge produced by the cationic functional group on the surface of the polymer particle divided by the surface area of the polymer particle. Methods for estimating the charge include a known electrophoresis method or a titration method utilizing electrostatic interaction of charged compounds. In particular, the present embodiment preferably calculates the surface charge density on the surface of the polymer particles by using an anionic fluorescent dye of 6-(p-toluidino)-2-naphthalenesulfonic acid sodium salt (TNS). The surface charge density ($\sigma$) of the polymer particles in the present embodiment can be measured more specifically by the method described in Example 3 for calculating the surface charge density of polymer particles using TNS adsorption characteristics.

The antimicrobial (antibacterial) test in the present embodiment can use, for example, a known minimum inhibitory concentration (MIC) measurement. MIC indicates the minimum concentration (ppm) which does not allow the test bacteria to grow during the investigation of the test bacteria growth in an appropriate multiple-fold dilution of the test antibacterial agent.

The concentration of polymer particles (Cp) exhibiting antimicrobial properties in the present embodiment may be a concentration of polymer particles, recognized to exhibit antimicrobial properties by an antimicrobial (antibacterial) test known in the art, and is preferably the MIC. The MIC in the present embodiment can be measured more specifically by the antibacterial test (MIC method) described in Examples.

The binding equilibrium constant (K) ($\mu M^{-1}$) as an index of affinity with TNS in the present embodiment is determined as follows: from the fluorescence intensity, calculated is the amount of adsorbed TNS, which is dependent on the concentration of added polymer particles, and then, from the obtained adsorption behavior, the binding equilibrium constant (K) can be calculated using the Langmuir adsorption isotherm, and can be determined more specifically by the method described in Example 3.

The cationic polymerization initiator in the present embodiment can be any initiator as long as exhibiting stable pH-independent cationic properties, and preferably one or more can be selected and used from 2,2'-azobis-(2-(1,3-dimethyl-4,5-dihydro-1H-imidazol-3-ium-2-yl)) propane triflate (abbreviated as "ADIP": CAS RN. 2088831-30-3), and compounds obtained by substituting a counter anion of ADIP with other ion, for example, ADIP-Cl obtained by being substituted with a chloride ion.

The cationic comonomer in the present embodiment can be a monomer having a vinyl bond group (carbon-carbon double bond), allowing copolymerization with the main monomer and being cationized in water (for example, a monomer having a primary to tertiary amine group), or a quaternary ammonium group- or phosphonium group-containing monomer that stably exhibits cationic properties independently of the environment. From the viewpoint of chemical stability of the polymer particles, the cationic comonomer is preferably a monomer having a quaternary ammonium group, more preferably a monomer having a quaternary ammonium group and the number of carbon atoms of 8 or more and 14 or less, and further preferably one or two selected from the group consisting of vinylbenzyltrimethylammonium chloride (VBTMA) and methacrylamidopropyltrimethylammonium chloride (MAPTAC).

The main monomer in the present embodiment can be any compound as long as having a carbon-carbon double bond (excluding a cationic comonomer). Among them, those skilled in the art can appropriately select one from the viewpoints of efficiency of the radical polymerization reaction, economy, safety, and the like.

According to a preferred embodiment of the present invention, examples of the main monomer used in the present embodiment preferably includes vinyl compound monomers, such as acrylamides, methacrylamides, acrylic acids, esters of acrylic acids, methacrylic acids, esters of methacrylic acids, vinyl acetate monomers, monomers having the number of carbon atoms of 5 or more, monomers having the number of carbon atoms of 6 or more, and monomers having an aromatic skeleton (for example, styrenes). In the present embodiment, from the viewpoint of the polymer particles having an appropriate relative permittivity ($\varepsilon_r$), the main monomer itself preferably has the number of carbon atoms of 5 or more, and more preferably the number of carbon atoms of 5 or more and 10 or less. More specifically, the main monomer is further preferably one or more selected from the group consisting of styrene, alkyl acrylate, and alkyl methacrylate.

In addition, according to a preferred embodiment of the present invention, the polymer particles preferably also have adhesiveness, and from the viewpoint of imparting adhesiveness to the polymer particles, the main monomer is preferably one or more selected from the group consisting of 2-ethylhexyl acrylate, 4-hydroxybutyl acrylate, and ethyl acrylate.

The polymer particles of the present embodiment can be produced by a general method for polymer particle synthesis such as emulsion polymerization or mini-emulsion polymerization. Such a synthesis method preferably includes performing a radical emulsion polymerization reaction using a cationic polymerization initiator, the main monomer, and the cationic comonomer. Such a synthesis method has fewer synthesis steps than a synthesis method in which a pre-synthesized cationic polymer is immobilized by a step such as kneading into polymer particles, and thus has an excellent synthesis efficiency.

The size of the polymer particles can be adjusted by polymerization reaction conditions such as stirring efficiency, reaction temperature, amount of surfactant used, and amount of polymerization initiator used. The mean particle size of the polymer particles of the present embodiment is, for example, 5 nm or more and 1000 nm or less, preferably 10 nm or more and 200 nm or less, more preferably 20 nm or more and 180 nm or less, and further preferably 100 nm or more and 170 nm or less. Note that the mean particle size of the polymer particles of the present embodiment can be measured using a scanning electron microscope, a dynamic light scattering method (DLS) measuring device, or the like. Measurements using a scanning electron microscope include, for example, a method: using a scanning electron microscope (Scanning Electron Microscope (S-4800), manufactured by Hitachi, Ltd.) , dripping a reaction solution on a collodion film-covered mesh (200 mesh, manufactured by Nissin EM Co., Ltd.), drying the drips thoroughly in the air, observing the drips, and obtaining the mean particle size of the polymer particles by calculating the mean value of 200 particles per sample. Measurements using a dynamic light scattering (DLS) measuring device includes a method of measuring a mean particle size of polymer particles using a particle size/zeta potential/molecular weight measuring device (Zetasizer Nano ZSP manufactured by Malvern Panalytical Ltd. or ELSZ-2 manufactured by Otsuka Electronics Co., Ltd.).

The conditions for producing the polymer particles can be adjusted as appropriate so that the resulting polymer particles satisfy the conditions (i) to (iii) above. For example, the relative permittivity ($\varepsilon_r$) as an index of surface hydrophobicity of polymer particles is mainly determined by the type of main monomer, and therefore can be adjusted by the type of main monomer and/or the amount used. For example, in order to satisfy the relative permittivity ($\varepsilon_r$) condition of the present embodiment, the main monomer preferably has the number of carbon atoms of 5 or more, more preferably 5 or more and 10 or less, and further preferably is one or more selected from the group consisting of styrene, alkyl acrylate, and alkyl methacrylate. Next, since the surface charge density ($\sigma$) of polymer particles is mainly determined by the particle size and/or cation introduction ratio, the surface charge density can be adjusted by the ratio of the used amount of cationic polymerization initiator and/or cationic comonomer with respect to the used amount of main monomer. In this case, increasing the number of cationic groups, though increasing the total amount of cations (i.e., surface charge), reduces the particle size, resulting in increase in the surface area per unit weight, which may decrease the surface charge density. The above point suggests that, in producing the polymer particles of the present embodiment, the amounts of the cationic polymerization initiator, cationic comonomer, and main monomer should be determined while checking the surface charge density ($\sigma$). Finally, it has been revealed that the larger the value of the binding equilibrium constant (K) of the polymer particles with TNS of the present embodiment is, the lower the concentration for exhibiting antibacterial activity is. Accordingly, in producing the polymer particles of the present embodiment, the amounts of the cationic polymerization initiator, cationic comonomer, and main monomer can be determined while checking the binding equilibrium constant (K) with TNS.

According to a preferred embodiment of the present invention, in the polymerization reaction for producing the polymer particles of the present embodiment, the amount of the cationic comonomer used, with respect to the total amount of the main monomer and the cationic comonomer, is 1.0 mol% or more and 7.0 mol% or less, more preferably 2.0 mol% or more and 4.5 mol% or less, and further preferably 2.4 mol% or more and 3.3 mol% or less.

According to a preferred embodiment of the present invention, in the polymerization reaction for producing the polymer particles of the present embodiment, the amount of the cationic polymerization initiator used, with respect to the total amount of the main monomer and the cationic comonomer, is 0.3 mol% or more and 1.0 mol% or less, more preferably 0.45 mol% or more and 0.8 mol% or less, and further preferably about 0.65 mol%.

As described above, the polymer particles of the present embodiment exhibit excellent antimicrobial action even in the presence of a salt. Therefore, in accordance with another aspect of the present invention, there is provided a composition for antimicrobial use comprising the antimicrobial polymer particles of the present embodiment and/or polymer particles. This composition for antimicrobial use may contain, in addition to the polymer particles of the present embodiment, components derived from the reaction mixture of the polymerization reaction, a suitable carrier, and the like. The composition for antimicrobial use of the present embodiment is preferably in the form of an emulsion, and the composition for antimicrobial use in such a form can be easily produced by employing an emulsion polymerization reaction as the polymerization reaction. Further, the composition for antimicrobial use of the present embodiment is preferably used for preventing food poisoning from a practical standpoint.

In accordance with another aspect of the present invention, there is provided a coating material for antimicrobial use comprising the above composition for antimicrobial use. This coating material for antimicrobial use may contain other components such as a resin or a solvent in addition to the polymer particles of the present embodiment.

In the coating material for antimicrobial use of the present embodiment, the content of the polymer particles with respect to the total amount of the polymer particles and components other than the polymer particles may be preferably 1 mass% or more, 5 mass% or more, 10 mass% or more, 20 mass% or more, 30 mass% or more, 40 mass% or more, or 45 mass% or more; or 100 mass% or less, 90 mass% or less, 80 mass% or less, 70 mass% or less, 60 mass% or less, or 55 mass% or less.

For the resin usable for the coating material for antimicrobial use of the present embodiment, applicable are all conventionally known resins as long as capable of forming a coating film adhering to the base material of glass, plastic, wood, or metal, and examples thereof include acrylic resin, urethane resin, silicone resin, and fluororesin. In the present embodiment, in particular acrylic resin such as polymethyl methacrylate can be used suitably.

For the solvent usable for the coating material for antimicrobial use of the present embodiment, applicable are all conventionally known solvents as long as the blended resin is dispersible or dissolvable therein, and examples thereof include water, oil, thinner, and alcohol. Among these, aqueous solvents are particularly preferred recently because they are less harmful to the environment and safe for humans. In the present embodiment, the cationic groups on the surface of the polymer particles enhance the stability of the polymer particles in water, which enables an aqueous solvent to be used suitably.

In addition, in the coating material for antimicrobial use of the present embodiment, the followings can be selected for the application and blended according to the known formulations: pigments or various additives, such as plasticizers, dispersants, antisettling agents, emulsifiers, thickeners, antifoaming agents, antiskinning agent, drying agents, anti-sagging agents, delustering agents.

In using the composition for antimicrobial use of the present embodiment and the coating material for antimicrobial use of the present embodiment, the polymer particles of the present embodiment are preferably adjusted so as to be applied under the condition satisfying the relational formula: $Cp \geq 3.0 \times 0.65^K$, wherein K ($\mu M^{-1}$): binding equilibrium constant as an index of affinity with TNS, Cp (mg/mL): polymer particle concentration.

[Examples]

The present invention will be explained in more detail by showing examples below. Note that the Examples shown below are described for explanation by way of example, and the present invention is not limited to these Examples in any way.

Cationic polymerization initiator

One of the cationic polymerization initiators, necessary to synthesize the polymer, of 2,2'-azobis-(2-(1,3-dimethyl-4,5-dihydro-1H-imidazol-3-ium-2-propane triflate (ADIP) was synthesized in accordance with the method described in Japanese Unexamined Patent Application Publication No. 2017-51113. Alternatively, used was the polymerization initiator ADIP-Cl which was obtained by substituting the counter anion of ADIP with chloride ion using an ion exchange resin (Yamazaki, Takashi, et al. "Controlled soap-free emulsion polymerization stability using a novel cationic azo radical initiator with chloride or triflate counter anion." Colloids and Surfaces A: Physicochemical and Engineering Aspects 609 (2021): 125614).

Mean particle size and particle size dispersion

The mean particle size and particle size dispersion of the produced polymer particles were measured, unless otherwise specified, using a scanning electron microscope (Scanning Electron Microscope (S-4800) manufactured by Hitachi, Ltd.). Dripping a reaction solution on a collodion film-covered mesh (200 mesh, manufactured by Nissin EM Co., Ltd.), drying the drips thoroughly in the air, and the drips were observed. The particle size distribution was determined by using a caliper (manufactured by Mitsutoyo) to measure the size in an image of scanning transmission electron microscope (STEM image) observed with a scanning electron microscope (S-4800). Particle size measurements were performed on 200 particles per sample.

Zeta potential

A laser zeta potential analyzer (ELSZ-2 manufactured by Otsuka Electronics Co., Ltd.) was used to measure the zeta potential of the produced polymer particles.

Produced polymer yield (%)

The yield (%) of the produced polymer in this Example was calculated by a gravimetric measurement. The specific calculation method is as follows. The sample suspension collected after the completion of the synthesis was transferred to a 100-mL eggplant flask while being flushed with ultrapure water and ethanol. Next, the sample was frozen while rotating the eggplant flask in liquid nitrogen. The volatile components such as water, ethanol, and monomers in the sample suspension were completely removed through 16-hour freeze-drying using a freeze dryer (FD-5N model manufactured by Tokyo Rikakikai Co., Ltd.). Thereafter, the yield of the produced polymer was determined from the value obtained by subtracting the weight of the polymerization initiator from the weight of the remaining solids.

Equipment used for polymer particle polymerization

The equipment used for polymer particle polymerization is as follows. A glass cylindrical stirring tank with an inner diameter of 7.5 cm and a height of 15 cm was used as the reactor. Further, in order to keep the inside of the system uniform, four stainless steel baffles with a width of 0.7 cm were attached to the inner wall of the reactor for stirring. Four inclined blades with a blade diameter of 5 cm and an inclination angle of 45 degrees were used for the stirring blade. The stirring blade was installed so that the center of the blade was at a height of 1 cm from the bottom of the reactor. Further, various operations were performed under a nitrogen atmosphere to prevent the mixing of oxygen that disturbs the polymerization reaction, and an inlet for nitrogen flow was installed at the top of the reactor. During the nitrogen bubbling of the reaction solvent and the reaction under a nitrogen atmosphere, the experimental operations were performed with a reflux condenser installed to prevent evaporation of the monomer and solvent.

Antibacterial test

The MIC method was used for the antibacterial test. Staphylococcus epidermidis (NBRC12993) was inoculated into 2 mL of NRBC No. 702 medium (HYPOLYPEPTON 10 g/L, yeast extract 2 g/L, $MgSO_4 \cdot 7H_2O$ 1 g/L, pH 7.0), and cultured with shaking at 35°C for 24 hours. The preculture bacterial suspension and 200 $\mu$L of NRBC No. 702 medium were added in a 96-well flat bottom plate so that the $OD_{600}$ value was 0.01 (GeneQuant 1300 manufactured by GE Healthcare Japan Co., Ltd.). Each polymer suspension sample was subjected to repeated doubling dilutions and added thereto. The mixture was sealed with an aluminum seal and cultured with shaking at 35°C for 24 hours.
The cloudy culture solution due to addition of the polymer suspension disturbed checking of the presence or absence of proliferation based on the cloudiness. Therefore, after culturing, pipetting the culture solution to uniformly disperse the bacterial suspension, and then diluting the suspension by a factor of 1000, 5 $\mu$L of the diluted suspension was spotted on agar medium NBRC No. 802 (HYPOLYPEPTON 10 g/L, yeast extract 2 g/L, $MgSO_4 \cdot 7H_2O$ 1 g/L, agar 15 g/L, pH 7.0) and lightly air-dried to avoid dripping. After culturing at 35°C for 20 hours, the presence or absence of antibacterial action was determined by comparing the colony formation status of the bacterial suspension with that of a bacterial suspension with a known number of bacteria spotted on the same plate. The minimum concentration (ppm) at which the test bacteria did not grow was defined as MIC for each polymer suspension.

Example 1: Synthesis of cationic polymer particles

The reaction solvent was prepared by dissolving the cationic comonomer at a predetermined concentration in 220 mL of deionized water that was bubbled with nitrogen for 30 minutes to remove dissolved oxygen in the reaction solution. The reaction solvent was charged into a reactor, and the reactor temperature was kept constant in a constant-temperature bath set at a predetermined temperature. Next, the inside of the reactor was purged with nitrogen, then styrene as a main monomer was added thereto, and the mixture was stirred for 20 minutes. Thereafter, 30 mL of aqueous solution of a cationic polymerization initiator was added into the reactor to initiate polymerization. The polymerization was performed under a nitrogen atmosphere at a polymerization temperature of 70°C and a stirring speed of 360 rpm for 9 hours. The styrene concentration was 300 mM, the type and concentration of the cationic comonomer were as shown in Table 1, and the initiator concentration was 2 mM.
Table 1 shows the results of the various polymer particles (emulsion) produced such as particle size, zeta potential, and MIC. Note that the particle size in Table 1 refers to the mean particle size.

[Table 1]

| Table 1: Particle size, zeta potential, and MIC of polymer particles | | | | | | |
|---|---|---|---|---|---|---|
| Sample | Initiator | Comonomer | | Particle size (nm) | Zeta potential (mV) | MIC (mg/mL) |
| | | Type | Concentration (mM) | | | |
| No. 1 | ADIP | VBTMAC | 0.10 | 178 | 48 | >0.50 |
| No. 7 | ADIP | VBTMAC | 7.5 | 154 | 51 | 0.69 |
| No. 8 | ADIP | VBTMAC | 10 | 155 | 31 | 0.99 |
| No. 9 | ADIP | VBTMAC | 20 | 86 | 46 | 2.7 |
| No. 12 | ADIP-CI | VBTMAC | 30 | 52 | 48 | 4.0 |
| No. 17 | ADIP | MAPTAC | 20 | 98 | 35 | 2.0 |
| No. 18 | ADIP | MAPTAC | 30 | 159 | 37 | >2.1 |
| No. 23 | V-50 | VBTMAC | 7.5 | 63 | 53 | >1.3 |

Comparing the MICs of these samples revealed the following phenomena. The comparison of No. 7 and No. 23 showed that use of an initiator of ADIP significantly enhances antibacterial properties. The observed antibacterial properties in No. 12 clearly showed that an initiator of ADIP-CI can be used. In addition, the exhibited antibacterial properties in both No. 9 and No. 17 clearly showed that each of cationic comonomers VBTMA and MAPTAC can be used as antibacterial polymer particle. The above results indicate that antimicrobial polymer particles (emulsion) can be synthesized by using ADIP or ADIP-CI as an initiator and using any type of cationic comonomers.

Example 2: Hydrophobicity evaluation of polymer particle surface

TNS was dissolved in ethanol to 100 $\mu$M for preparation. One mL of the measurement solution and suspension was placed in a quartz cell, and then TNS was added thereto to measure fluorescence. The fluorescence was measured using 1 mL of 1,4-dioxane mixed solvent, to which 10 $\mu$L of TNS was added. In the fluorescence measurement of the polymer particle suspension, to 1 mL of polymer particle suspension prepared at a solid concentration of 0.1 mg/mL, each time 10 $\mu$L of TNS solution was added, the fluorescence spectrum (excitation wavelength 340 nm) was measured. Since TNS does not exhibit fluorescence in a polar solvent environment such as water having high relative permittivity, the fluorescence spectrum obtained from the polymer particle suspension is presumably derived from TNS distributed on the hydrophobic surface of the polymer particles.
Table 2 shows the measurement results of the relative permittivity ($\varepsilon_r$) of a part of the polymer particles synthesized in Example 1. The relative permittivity of the polymer particle surface was calculated from the relationship in Table 3: Fluorescent peak wavelength ($\lambda_{em}$) and known relative permittivity of TNS in water/1,4-dioxane mixed solvent (F. E. Critchfield, J. A. Gibson, J. L. Hall, J. Am. Chem. Soc, 75, 1991-1992 (1953)). The fluorescence spectrum used to calculate the relative permittivity of the polymer particle surface was determined as follows: to 1 mL of the polymer particle suspension prepared at a solid concentration of 0.1 mg/mL, each time 10 $\mu$L of 100 $\mu$M TNS solution was added, a fluorescence spectrum was measured and the rate of increase from the last measurement in fluorescence intensity at a fluorescence wavelength of 438 nm was checked to be 5% or less, and when the rate was in the range, the spectrum of that measurement was selected. In such a case, a sufficient amount of TNS is presumably in close proximity to the surface of the polymer particle.

[Table 2]

| Table 2: Relative permittivity ($\varepsilon_r$) of polymer particle surface | | | |
|---|---|---|---|
| Sample | No. 7 | No. 8 | No. 23 |
| $\lambda_{em}$ (nm) | 437 | 437 | 438 |
| $\varepsilon_r$ | 19.4 | 19.5 | 19.9 |

[Table 3]

| Table 3: Relationship between TNS fluorescent peak wavelength ($\lambda em$) and known relative permittivity in water/1,4-dioxane mixed solvent | | |
|---|---|---|
| Dioxane (v/v%) | $\lambda_{em}$ (nm) | $\varepsilon_r$ |
| 60 | 448 | 27.2 |
| 70 | 441 | 19.1 |
| 80 | 435 | 11.9 |
| 90 | 431 | 6.07 |
| 100 | 418 | 2.21 |

As a result, the surface properties of the polymer particles used presently were comparable in the relative permittivity ($\varepsilon_r$) to lower alcohols such as ethanol. Lower alcohols are known to destroy the cell membrane structure of bacteria, which suggested the followings: The present polymer particles have characteristics of acting on the membranes of microorganisms such as bacteria to destroy their structure and damage the membranes, and this contributes to the mechanism of antimicrobial function of polymer particles in embodiments of the present invention.

Example 3: Relationship between calculation of surface charge density of polymer particles using TNS adsorption characteristics and antibacterial performance

Prior to damaging membrane which has been suggested as a mechanism for antimicrobial activity, there exists adsorption of polymer particles onto the membrane surface. The cell membranes of microorganisms such as bacteria are negatively charged, and thus easily adsorbed by cationic polymer particles. In addition, Example 2 revealed that the anionic fluorescent dye TNS was adsorbed on the surface of the polymer particles. Based on the above characteristic, the TNS adsorption amount, dependent on the addition concentration, was calculated from the fluorescence intensity, and from the obtained adsorption behavior, the saturated adsorption concentration Cmax and the binding equilibrium constant (K) ($\mu$M$^{-1}$) were calculated for each polymer particle using Langmuir adsorption isotherm.

Specifically, TNS was added to 0.1 mg/mL of polymer particles, and the fluorescence intensity at 438 nm ($I_{438}$) using an excitation wavelength of 340 nm was calculated. The concentration of TNS adsorbed on the polymer particles ($C_{ads}$) was given by Formula 1. $C_{TNS}$ and $I_{438}$, 1 $\mu$M in Formula 1 indicate the followings: $C_{TNS}$: concentration of TNS, and $I_{438}$, 1 $\mu$M: fluorescence intensity when TNS at $C_{TNS}$ of 1 $\mu$M is assumed to all adsorb on the polymer particles at 0.1 mg/mL. $C_{eq}$ represents the equilibrium concentration of TNS in solution.

[Math. 1]

$$C_{ads} = \frac{I_{438}}{I_{438,1\mu M}} \quad \text{(Formula 1)},$$

[Math. 2]

$$C_{TNS} = C_{ads} + C_{eq} \quad \text{(Formula 2)},$$

Next, the saturated adsorption amount $q_{max}$ ($\mu$mol/g) of TNS per unit weight of polymer particles was calculated from Langmuir adsorption isotherm shown in Formula 3.
[Math. 3]

$$q = \frac{q_{max} K C_{eq}}{1 + K C_{eq}} \quad \text{(Formula 3)}.$$

When the polymer particle concentration is 0.1 mg/mL, $q$ and $q_{max}$ are replaced by $C_{ads}$ and $C_{max}$, and thus Formula 3 can be changed as Formula 4.
[Math. 4]

$$\frac{1}{C_{ads}} = \frac{1}{K C_{max}} \frac{1}{C_{eq}} + \frac{1}{C_{max}} \quad \text{(Formula 4)}.$$

Further, the charge density $\sigma$ on the surface of the polymer particle was calculated from Formula 5 using the obtained values of the binding equilibrium constant ($K$) and $q_{max}$. In Formula 5, $N_A$ is Avogadro's number, $\rho$ is density of the polymer particles (mainly PS, 1.05 g/cm$^3$), and Dv is the particle size shown in Table 1.
[Math. 5]

$$\sigma \, [\text{unit/nm}^2] = \frac{q_{max} \, N_A}{\left(\frac{6}{\rho D_V}\right)}, \quad \text{(Formula 5)}$$

The polymer particles synthesized in Example 1 were subjected to an adsorption test using TNS, and parameters related to the electrical properties of the surface of the polymer particles were calculated. The results are shown in Table 4.

[Table 4]

| Table 4: Parameters related to the electrical properties of the particle surface of the synthesized polymer particles | | | | | |
|---|---|---|---|---|---|
| Sample | MIC (mg/mL) | K ($\mu$M$^{-1}$) | $q_{max}$ ($\mu$mol/g) | Surface charge density $\sigma$ (unit/nm$^2$) | Zeta potential (mV) |
| No. 1 | >0.5 | 1.44 | 20.2 | 0.379 | 48.2 |
| No. 7 | 0.69 | 4.40 | 35.6 | 0.578 | 51.2 |
| No. 8 | 0.99 | 2.53 | 46.0 | 0.750 | 31.3 |
| No. 9 | 2.7 | 0.25 | 74.1 | 0.672 | 46.3 |
| No. 12 | 4.0 | 0.40 | 99.6 | 0.546 | 47.8 |
| No. 18 | >2.2 | 0.28 | 38.4 | 0.643 | 36.7 |
| No. 23 | >1.3 | 1.73 | 59.2 | 0.393 | 53.0 |

From the results, comparing No. 7 and No. 23 shown in Example 1, No. 7 had a higher surface charge density and exhibited antibacterial properties at lower concentrations compared with No. 23. In addition, compared with No. 7 which had antibacterial properties, No. 1, though using ADIP as an initiator similarly with No. 7, exhibited very weak antibacterial performance, and also had a surface charge density as low as in the case of No. 23. These results showed that a certain surface charge density was required to exhibit antibacterial properties, and that the threshold value was 0.5 (unit/nm$^2$). Since lipid membranes of microorganisms contain anionic lipids and thus cannot form strong bonds with polymer particles not having cationic charge of certain density, as in the above results, the polymer particles in which cationic groups are not presented at a certain high density understandably were not able to exhibit antibacterial properties.

In contrast, the correlation was checked between the zeta potential, which is generally an index of surface charge density, and the MIC to find no correlation at all, as shown in Fig. 1.

The above results also suggested that the charge density calculation method of the present invention is a necessary measurement method for determining the performance of antimicrobial particles.

Example 4: Relationship between binding equilibrium constant (K) and antibacterial properties of anionic dye

Although surface charge density has been shown to be a parameter that characterizes antimicrobial particles, prediction of the strength of their antimicrobial properties is still difficult. Accordingly, an index was searched that correlates among each parameter obtained in Example 3 and MIC, and a certain correlation was found out between the binding equilibrium constant (K) and the concentration of polymer particles for exhibiting antibacterial properties (Fig. 2). Fig. 2 is a graph showing the above correlation for polymer particles with a surface charge density of 0.5 units/nm$^2$ or higher by a semi-logarithmic plot of the particle concentration Cp (mg/mL) on the vertical axis against the cationic polymer particles' binding equilibrium constant (K), which is a physical property parameter of each polymer particle, wherein test sections exhibiting antibacterial effects in the MIC test are indicated by black circles and low-concentration test section exhibiting no antibacterial properties are indicated by white squares. Note that the test concentration determined as MIC is marked with an asterisk.

From this result, with the straight line of a formula, Log Cp = - 0.19K + 3.0, shown in Fig. 2 as the boundary, antibacterial properties were exhibited in the upper part of the graph, and no antibacterial properties were shown in the lower part. In other words, this semilogarithmic graph shows that antibacterial properties are exhibited at polymer particles and polymer particle concentrations that satisfy the formula, Log Cp $\geq$ -0.19K + 3.0. This formula is converted to a formula, Cp $\geq$ 3.0 $\times$ 0.65$^K$, and polymer particles and polymer particle concentrations satisfying the converted formula will exhibit antibacterial properties. This formula revealed that the larger the value of the binding equilibrium constant (K), the lower the concentration for exhibiting antibacterial activity.

Summary of Examples 1 to 4

Summary of the results of Examples 1 to 4 revealed that antimicrobial polymer particles with a cationic surface satisfy the following conditions for three parameters.

(i) Surface hydrophobicity $\varepsilon_r \leq 24$
(ii) Surface charge density $\geq$ 0.5 unit/nm$^2$
(iii) Satisfying the relational formula: Cp $\geq$ 3.0 $\times$ 0.65$^K$, wherein K ($\mu$M$^{-1}$): binding equilibrium constant with TNS, Cp (mg/mL): polymer particle concentration

Example 5: Synthesis of cationic polymer particle

Bubbled with argon gas for 30 minutes, deionized water from which dissolved oxygen was removed was prepared. Into a 30 mL vial (product name: SV-30 manufactured by Nichiden-Rika Glass Co., Ltd.), dispensed are styrene (hereinafter referred to as St) and methyl methacrylate (hereinafter referred to as MMA) as main monomers so as to be a total final concentration of 300 mM, and then, VBTMAC as cationic comonomer was dispensed so as to be a final concentration of 10 mM (see Table 5). Degassed deionized water was added thereto so as to be a total of 29 mL, and 1 mL of an aqueous solution of ADIP dissolved in deionized water was added dropwise so as to be a final concentration of 2 mM. This mixture was subjected to a reaction in a 70°C water bath for 22 hours while being continuously stirred using a magnetic stirrer. The obtained synthetic liquid was dialyzed for 48 hours using a dialysis membrane with a cutoff of 3.5 kDa to prepare a sample.

Table 5 shows the mean particle sizes of the synthesized polymer particles (emulsion) MM351 and MM352. Here, the mean particle size of Example 5 was measured using a particle size/zeta potential/molecular weight measuring device (Zetasizer Nano ZSP, manufactured by Malvern Panalytical Ltd.). In addition, in the same manner as in Examples 2 and 3, the relative permittivity ($\varepsilon_r$) as an index of surface hydrophobicity and the surface charge density ($\sigma$) were measured using an anionic fluorescent dye. All samples showed $\varepsilon_r$ of 20 or less and $\sigma$ of 0.5 or more. In addition, the binding equilibrium constant (K) as an index of affinity with TNS was determined to be 2.8 ($\mu$M$^{-1}$) for MM351 and 0.8 ($\mu$M$^{-1}$) for MM352, resulting in values of 3.0 $\times$ 0.65$^K$ of 0.91 for MM351 and 2.1 for MM352. An antibacterial test performed against Staphylococcus epidermidis revealed the followings: MM351 exhibited antibacterial properties at a polymer particle concentration of 1.6 mg/mL, while not exhibiting antibacterial properties at a polymer particle concentration of 0.4 mg/mL, indicating that, at a polymer particle concentration satisfying Cp $\geq$ 3.0 $\times$ 0.65$^K$, antibacterial properties were exhibited. Similarly, MM352 exhibited antibacterial properties at a polymer particle concentration of 3.4 mg/mL while not exhibiting antibacterial properties at a polymer particle concentration of 0.43 mg/mL, indicating that, at a polymer particle concentration satisfying Cp $\geq$ 3.0 $\times$ 0.65$^K$, antibacterial properties were exhibited.

From the above results, it was revealed that polymer particles containing styrene and methyl methacrylate as main monomers also exhibited antimicrobial properties when satisfying the following conditions for three parameters.

(i) Surface hydrophobicity $\varepsilon_r \leq 24$
(ii) Surface charge density $\geq$ 0.5 unit/nm$^2$
(iii) Satisfying the relational formula: Cp $\geq$ 3.0 $\times$ 0.65$^K$, wherein K ($\mu$M$^{-1}$): binding equilibrium constant with TNS, Cp (mg/mL): polymer particle concentration

[Table 5]

Table 5: Mean particle size of polymer particles and electrical properties of particle surface

| Sample | Initiator | Main monomer (mM) | | Cationic comonomer (mM) | Mean particle size (nm) | $\varepsilon_r$ (-) | Surface charge density $\sigma$ (unit/nm$^2$) |
|---|---|---|---|---|---|---|---|
| | | St | MMA | VBTMAC | | | |
| MM351 | ADIP | 200 | 100 | 10 | 240 | 19.1 | 2.0 |
| MM352 | ADIP | 100 | 200 | 10 | 118 | 16.7 | 0.9 |

Example 6: Safety and antibacterial spectra of cationic polymer particle

MM351 produced in Example 5 was subjected to a mutagenicity test using microorganisms. Specifically, a total of 5 strains, 4 strains of Salmonella typhimurium TA98, TA100, TA1535, and TA1537, and 1 strain of Escherichia coli WP2uvrA (all obtained from independent administrative agency, the National Institute of Technology and Evaluation, Biotechnology Center NBRC) were subjected to a reverse mutation test using the preincubation method in accordance with the Ministry of Labor's notification No. 77. As a result of the reverse mutation test, MM351 was negative.

MM351 and MM352 were subjected to a skin irritation test using a human cultured skin model (trade name: LabCyte EPI-MODEL24, manufactured by Japan Tissue Engineering Co., Ltd.) to show the skin irritation test results of all non-irritating. From the above, MM351 and MM352 was also revealed to have high safety in spite of having high antibacterial properties. Further, as a result of an antibacterial test using the MIC method, MM351 was revealed to have an MIC of 1.3 mg/mL, and thus to exhibit antibacterial properties also against Staphylococcus aureus and Escherichia coli.

Example 7: Antibacterial evaluation of glass coated with cationic polymer particles

MM351 prepared in Example 5 was submitted to an antibacterial test as a sample prepared as follows: 0.1 mL of MM351 was spread on a 4.5 cm $\times$ 4.5 cm section inside of a 5 cm $\times$ 5 cm glass plate, dried at 110°C for 1 hour, and then stored at room temperature. The antibacterial test used was, only for Example 7, JISZ2801 (antibacterial processed products-antibacterial test method/antibacterial effect) instead of the MIC method, and the antibacterial test was performed for Staphylococcus aureus and Escherichia coli in accordance with JIS. Note that, the JIS Z2801 antibacterial test method includes pre-cultivation of test bacteria, preparation of test pieces, preparation of a test bacterial suspension, inoculation of the bacterial suspension, cultivation of test pieces inoculated with the test bacterial suspension, washing out of the inoculated test bacteria, and measuring the number of viable bacteria using the agar plate culture method; and the test procedures above were performed in this order, and then, from the number of colonies measured, the number of the viable bacteria (count/cm$^2$) is determined based on the formula: N = C $\times$ D $\times$ V (wherein N: number of viable bacteria (per test piece), C: number of colonies (average number of the colonies in the two adopted Petri dishes), D: dilution factor (the dilution factor of the diluted solution dispensed into the adopted Petri dishes), and V: volume (ml) of the SCDLP medium used for washing out). The antibacterial activity value is calculated by subtracting the common logarithm of the number of viable bacteria after 24-hour incubation on MM351-coated glass from the common logarithm of the number of viable bacteria after 24-hour incubation on untreated glass, the antibacterial activity value exceeding 2 is judged as having antibacterial activity by JIS.

The results of the antibacterial test in accordance with JIS Z2801 are shown in Tables 6 and 7. The results in Tables 6 and 7 revealed that samples prepared by applying MM351 to the inside of a glass plate and air-drying exhibited high antibacterial activity against both Staphylococcus aureus and Escherichia coli. Further, having antibacterial activity against both Gram-positive and Gram-negative bacteria showed that the polymer particles associated with MM351 have antimicrobial properties even as applied on glass.

[Table 6]

| Table 6: Antibacterial activity value of MM351-coated glass against Staphylococcus aureus | | | |
|---|---|---|---|
| Sample | Common logarithm of viable bacteria count (count/cm$^2$) | | Antibacterial activity value |
| | Immediately after inoculation | After 24 hours incubation | |
| MM351-coated glass | - | 0.3 | 4.1 |
| Untreated glass | 4.06 | 4.41 | - |

[Table 7]

| Table 7: Antibacterial activity value of MM351-coated glass against Escherichia coli | | | |
|---|---|---|---|
| Sample | Common logarithm of viable bacteria count (count/cm$^2$) | | Antibacterial activity value |
| | Immediately after inoculation | After 24 hours incubation | |
| MM351-coated glass | - | <-0.20 | > 5.8 |
| Untreated glass | 4.29 | 5.63 | - |

Example 8: Antiviral evaluation of glass coated with cationic polymer particles

MM351 prepared in Example 5 was submitted to an antiviral test as a sample prepared as follows: 0.1 mL of MM351 was spread on a 4.5 cm × 4.5 cm section inside of a 5 cm × 5 cm glass plate (thickness 3 mm), dried at 110°C for 1 hour, and then stored at room temperature. The antiviral test was performed in accordance with the ISO standard ISO 21702 (Measurement of antiviral activity of plastic and other non-porous surfaces) using feline calicivirus (F-9) strain VR-782 (from the American Type Culture Collection (ATCC)), and the antiviral activity value was calculated. The detailed method for performing the antiviral test and calculating the antiviral activity value is as follows.
A 0.4 mL aliquot of a virus solution was dropped onto a 5 cm square test piece (MM351-coated glass and uncoated glass) and covered with a 4 cm square polyethylene film. This test piece was left standing at 25°C for 24 hours. After the standstill, the virus on the test piece was washed out and collected, and the virus infectivity titer was measured by a plaque measurement method. CRFK cells CCL-94 (obtained from ATCC) were used as host cells. Note that, performing a host cell confirmation test allowed confirmation that the applied MM351 had no toxicity to host cells and did not affect the sensitivity of host cells to viruses. The antiviral activity value was calculated using the following Formula 6.
[Math. 6]

$$R = Ut - At \quad \text{(Formula 6)}$$

Note that each symbol in Formula 6 indicates the followings.

R: Antiviral activity value
Ut: Average of common logarithm of virus infectivity titer (PFU/cm$^2$) after 24 hours of standing on uncoated glass
At: Average of common logarithm of virus infectivity titer (PFU/cm$^2$) after 24 hours of standing on MM351-coated glass

The antiviral activity value exceeding 2 is judged as having antiviral activity by ISO standards.
The results of the above antiviral test are shown in Table 8. Table 8 clearly showed that the test using MM351-coated glass had an antiviral activity value of 2.6, indicating that MM351-coated glass exhibits antiviral and antimicrobial properties. In particular, since feline calicivirus is often used as a substitute virus for norovirus in experiments, it can be said that MM351 can be suitably used in places with a high risk of viral infection such as food poisoning, and thus that MM351 can be used for the purpose of preventing food poisoning.

[Table 8]

| Table 8: Antibacterial activity value of MM351-coated glass against feline calicivirus | | | |
|---|---|---|---|
| Sample | Common logarithm of virus titer (count/cm$^2$) | | Antiviral activity value R |
| | Immediately after inoculation | After 24 hours incubation $U_t$ or $A_t$ | |
| MM351-coated glass | - | 2.19 | 2.6 |
| Untreated glass | 5.38 | 4.87 | - |

Example 9: Synthesis and evaluation of cationic acrylic polymer particle

Into a 30 mL vial (product name: SV-30 manufactured by Nichiden-Rika Glass Co., Ltd.), dispensed was n-butyl acrylate as main monomer so as to be a final concentration of 300 mM, and then, VBTMAC as cationic comonomer was dispensed so as to be a final concentration of 10 mM, and added was ion-exchanged water degassed with argon gas so as to be a total of 29 mL. Added here dropwise was 1 mL of aqueous solution of ADIP-Cl dissolved in ion-exchanged water so as to be a final concentration of 2 mM, and the mixture was subjected to a reaction for 22 hours while stirring with a magnetic stirrer in a 70°C water bath. In addition, in the same manner as in Examples 2 and 3, the relative permittivity ($\varepsilon_r$) as an index of surface hydrophobicity, the surface charge density ($\sigma$), and the binding equilibrium constant (K) as an index of affinity with TNS were determined using an anionic fluorescent dye.

Table 9 shows the mean particle size, relative permittivity ($\varepsilon_r$), and surface charge density ($\sigma$) of MM361 of synthesized polymer particle (emulsion). Note that, the mean particle size of Example 9 was measured using a particle size/zeta potential/molecular weight measuring device (trade name: Zetasizer Nano ZSP, manufactured by Malvern Panalytical Ltd.). As a result, $\varepsilon_r$ was 24 or less, $\sigma$ was 0.5 or more, and the value of $3.0 \times 0.65^K$ was 2.5. An antibacterial test performed against Staphylococcus epidermidis revealed the followings: antibacterial properties were exhibited at a polymer particle concentration of 2.52 mg/mL and no antibacterial properties were exhibited at a polymer particle concentration of 0.31 mg/mL, indicating that antibacterial properties were exhibited at a polymer particle concentration satisfying $Cp \geq 3.0 \times 0.65^K$.

From the above results, a polymer particle emulsion containing n-butyl acrylate as the main monomer also were found that, when satisfying the following conditions for three parameters, antimicrobial properties were exhibited.

(i) Surface hydrophobicity $\varepsilon \leq 24$
(ii) Surface charge density $\geq 0.5$ unit/nm$^2$
(iii) Satisfying the relational formula: $Cp \geq 3.0 \times 0.65^K$, wherein K ($\mu M^{-1}$): binding equilibrium constant with TNS, Cp (mg/mL): polymer particle concentration

Here, poly(n-butyl acrylate) obtained by polymerizing the main monomer, n-butyl acrylate, has a glass transition temperature of room temperature or lower when the number average molecular weight is, for example, 10,000 or more. That is, it was shown that when a polymer has a number average molecular weight of 10,000 or more and a glass transition temperature of room temperature or lower, use of a monomer constituting the above polymer as a main monomer of the polymer particles in the present invention allows the polymer particles to have excellent antimicrobial properties.

[Table 9]

| Table 9: Mean particle size of polymer particles and electrical properties of particle surface | | | | | |
|---|---|---|---|---|---|
| Sample | Initiator | Mean particle size (nm) | $\varepsilon_r$ (-) | Surface charge density $\sigma$ (unit/nm$^2$) | K ($\mu M^{-1}$) |
| MM361 | ADIP-Cl | 134 | 21.5 | 0.7 | 0.5 |

Comparative Example 1: Synthesis and evaluation of cationic polymer particles MM388

Into a 30 mL vial (product name: SV-30 manufactured by Nichiden-Rika Glass Co., Ltd.), dispensed were St as a main monomer so as to be a final concentration of 100 mM, MMA so as to be a final concentration of 200 mM, and (3-acrylamidopropyl)trimethylammonium chloride (APTMA) as a cationic comonomer so as to be a final concentration of 30mM. After adding thereto ion-exchanged water degassed with argon so as to be a total of 29 mL, added here dropwise was 1 mL of aqueous solution of ADIP dissolved in ion-exchanged water so as to be a final concentration of 2 mM, and the mixture was subjected to a reaction for 22 hours while stirring with a magnetic stirrer in a 70°C water bath. In addition, in the same manner as in Examples 2 and 3, the relative permittivity ($\varepsilon_r$) as an index of surface hydrophobicity was measured using an anionic fluorescent dye.

The relative permittivity ($\varepsilon_r$) of the synthesized polymer particles MM388 (emulsion) was 25.2. An antibacterial test performed against Staphylococcus epidermidis revealed the followings: even at a polymer particle concentration of 4 mg/mL, no antibacterial properties were exhibited, and the antibacterial properties were extremely low or there were almost no antibacterial properties. These particles were considered to have no antimicrobial properties due to such high hydrophilicity as exhibiting a relative permittivity ($\varepsilon_r$) exceeding 24.

**Claims**

1. Polymer particles containing a structural unit derived from a cationic polymerization initiator, a main monomer containing a carbon-carbon double bond (excluding a cationic comonomer), and a cationic comonomer containing a carbon-carbon double bond, and satisfying all of the following conditions:

    (i) a relative permittivity ($\varepsilon_r$), as an index of surface hydrophobicity, $\leq 24$;
    (ii) a surface charge density ($\sigma$) $\geq 0.5$ unit/nm$^2$; and
    (iii) satisfying a relational formula: Cp $\geq 3.0 \times 0.65^K$, wherein K ($\mu M^{-1}$): binding equilibrium constant as an index of affinity with 6-(p-toluidino)-2-naphthalenesulfonic acid sodium salt (TNS), Cp (mg/mL): polymer particle concentration for exhibiting antimicrobial properties.

2. The polymer particles according to claim 1, wherein the relative permittivity ($\varepsilon_r$) as an index of surface hydrophobicity in (i) is 20 or less.

3. The polymer particles according to any one of claim 1 or 2, wherein the cationic polymerization initiator is 2,2'-azobis-(2-(1,3-dimethyl-4,5-dihydro-1H-imidazol-3-ium-2-yl)) propane triflate (ADIP), or 2,2'-azobis-(2-(1,3-dimethyl-4,5-dihydro-1H-imidazol-3-ium-2-yl))propane chloride (ADIP-Cl).

4. The polymer particles according to any one of claim 1 or 2, wherein the cationic comonomer is vinylbenzyltrimethylammonium chloride (VBTMA) and/or methacrylamidopropyltrimethylammonium chloride (MAPTAC).

5. The polymer particles according to any one of claim 1 or 2, wherein the polymer particles are obtained by a polymerization reaction using the cationic polymerization initiator, the main monomer, and the cationic comonomer, and the amount of the cationic comonomer used in the polymerization reaction is 1.0 mol% or more and 7.0 mol% or less with respect to the total amount of the main monomer and the cationic comonomer.

6. The polymer particles according to claim 5, wherein the amount of the cationic polymerization initiator used in the polymerization reaction is 0.3 mol% or more and 1.0 mol% or less with respect to the total amount of the main monomer and the cationic comonomer.

7. A composition for antimicrobial use comprising the polymer particles according to any one of claim 1 or 2.

8. The composition for antimicrobial use according to claim 7, wherein the composition is used for preventing food poisoning.

9. The composition for antimicrobial use according to claim 7, wherein the composition is in a form of an emulsion.

10. A coating material for antimicrobial use comprising the composition for antimicrobial use according to claim 7.

11. An antimicrobial composition for using the polymer particles according to claim 1 under the condition satisfying a relational formula: Cp $\geq 3.0 \times 0.65^K$, wherein K ($\mu M^{-1}$): binding equilibrium constant as an index of affinity with 6-(p-toluidino)-2-naphthalenesulfonic acid sodium salt (TNS), Cp (mg/mL): polymer particle concentration.

12. A composition for antimicrobial use for using the polymer particles according to claim 1 under the condition satisfying a relational formula: Cp $\geq 3.0 \times 0.65^K$, wherein K ($\mu M^{-1}$): binding equilibrium constant as an index of affinity with 6-(p-toluidino)-2-naphthalenesulfonic acid sodium salt (TNS), Cp (mg/mL): polymer particle concentration.

13. A method for selecting polymer particles exhibiting antimicrobial properties even in the presence of a salt from candidate polymer particles containing a structural unit derived from a cationic polymerization initiator, a main monomer containing a carbon-carbon double bond (excluding a cationic comonomer), and a cationic comonomer containing a carbon-carbon double bond, the method comprising the steps of:

(a) a step of checking whether the candidate polymer particles satisfying the following conditions:

(i) a relative permittivity ($\varepsilon_r$), as an index of surface hydrophobicity, $\leq 24$;
(ii) a surface charge density ($\sigma$) $\geq 0.5$ unit/nm$^2$; and
(iii) satisfying a relational formula: Cp $\geq 3.0 \times 0.65^K$, wherein K ($\mu$M$^{-1}$): binding equilibrium constant as an index of affinity with 6-(p-toluidino)-2-naphthalenesulfonic acid sodium salt (TNS), Cp (mg/mL): polymer particle concentration for exhibiting antimicrobial properties; and

(b) a step of identifying the candidate polymer particles, when satisfying all of the conditions (i) to (iii), as polymer particles exhibiting antimicrobial properties even in the presence of a salt.

14. The method according to claim 13, wherein the relative permittivity ($\varepsilon_r$) as an index of surface hydrophobicity in (i) is 20 or less.

15. The method according to any one of claim 13 or 14, wherein the cationic polymerization initiator is 2,2'-azobis-(2-(1,3-dimethyl-4,5-dihydro-1H-imidazol-3-ium-2-yl))propane triflate (ADIP), or 2,2'-azobis-(2-(1,3-dimethyl-4,5-dihydro-1H-imidazol-3-ium-2-yl))propane chloride (ADIP-Cl).

16. The method according to any one of claim 13 or 14, wherein the cationic comonomer is vinylbenzyltrimethylammonium chloride (VBTMA) and/or methacrylamidopropyltrimethylammonium chloride (MAPTAC).

17. Polymer particles containing a structural unit derived from a cationic polymerization initiator, a main monomer containing a carbon-carbon double bond (excluding a cationic comonomer), and a cationic comonomer containing a carbon-carbon double bond, and having a relative permittivity ($\varepsilon_r$), as an index of surface hydrophobicity, of 24 or less.

18. The polymer particles according to claim 17, wherein the main monomer has the number of carbon atoms of 5 or more and 10 or less.

19. The polymer particles according to any one of claim 17 or 18, wherein the main monomer is one or more selected from a group consisting of styrene, alkyl acrylate, and alkyl methacrylate.

20. The polymer particles according to any one of claim 17 or 18, wherein the cationic comonomer has a quaternary ammonium group and has the number of carbon atoms of 8 or more and 14 or less.

21. Use of the polymer particles according to any one of claim 17 or 18 for preparing a composition used for preventing food poisoning.

[Fig. 1]

[Fig. 2]

## INTERNATIONAL SEARCH REPORT

| | International application No. |
|---|---|
| | **PCT/JP2022/031788** |

**A. CLASSIFICATION OF SUBJECT MATTER**

*C08J 3/12*(2006.01)i; *A01N 33/12*(2006.01)i; *A01N 61/00*(2006.01)i; *A01P 1/00*(2006.01)i; *C08F 212/04*(2006.01)i;
*C09D 125/04*(2006.01)i; *C09D 201/00*(2006.01)i
FI:   C08J3/12 Z; A01N61/00 D; A01P1/00; C09D201/00; C09D125/04; A01N33/12 101; C08F212/04

According to International Patent Classification (IPC) or to both national classification and IPC

**B. FIELDS SEARCHED**

Minimum documentation searched (classification system followed by classification symbols)

C08J3/00-3/28; C08J99/00; C08C19/00-19/44; C08F6/00-246/00; C08F301/00; A01N1/00-65/48; A01P1/00-23/00;
C09D1/00-10/00; C09D101/00-201/10

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | WO 2019/208674 A1 (KIRIN HOLDINGS KABUSHIKI KAISHA) 31 October 2019 (2019-10-31)<br>claims, paragraph [0004], examples 5, 6-1 | 17-21 |
| A | | 1-16 |
| Y | JP 2003-055108 A (JAPAN MARINE SCI & TECHNOL CENTER) 26 February 2003 (2003-02-26)<br>claims, paragraph [0024] | 17-21 |
| A | | 1-16 |
| A | JP 2018-123061 A (TOYO INK SC HOLDINGS CO LTD) 09 August 2018 (2018-08-09)<br>entire text, all drawings | 1-21 |
| A | WO 2021/100797 A1 (KIRIN HOLDINGS KABUSHIKI KAISHA) 27 May 2021 (2021-05-27)<br>entire text, all drawings | 1-21 |

☐ Further documents are listed in the continuation of Box C.    ☑ See patent family annex.

| | |
|---|---|
| *    Special categories of cited documents:<br>"A"  document defining the general state of the art which is not considered to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
|---|---|
| **24 October 2022** | **08 November 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2022/031788**

| Patent document cited in search report | | | Publication date (day/month/year) | Patent family member(s) | Publication date (day/month/year) |
|---|---|---|---|---|---|
| WO | 2019/208674 | A1 | 31 October 2019 | US 2021/0363323 A1 claims, paragraph [0004], examples 5, 6-1 EP 3785541 A1 CN 112040776 A | |
| JP | 2003-055108 | A | 26 February 2003 | (Family: none) | |
| JP | 2018-123061 | A | 09 August 2018 | (Family: none) | |
| WO | 2021/100797 | A1 | 27 May 2021 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2021138344 A
- JP 2019208674 A
- JP 2019137811 A
- JP 2011524337 W
- JP 2017051113 A

### Non-patent literature cited in the description

- **SANCHES et al.** *J. Nanobiotechnol.,* 2015, vol. 13 (1), 1-13
- **GALVAO et al.** *Int. J. Mol. Sci.,* 2018, vol. 19 (10), 2965-2978
- *CHEMICAL ABSTRACTS,* 2088831-30-3
- **YAMAZAKI ; TAKASHI et al.** Controlled soap-free emulsion polymerization stability using a novel cationic azo radical initiator with chloride or triflate counter anion. *Colloids and Surfaces A: Physicochemical and Engineering Aspects,* 2021, vol. 609, 125614
- **F. E. CRITCHFIELD ; J. A. GIBSON ; J. L. HALL.** *J. Am. Chem. Soc,* 1953, vol. 75, 1991-1992